# FASCICULE DE BREVET EUROPEEN

(11) **EP 0 649 860 B1**
(45) Date de publication et mention de la délivrance du brevet: **26.09.2001**
(21) Numéro de dépôt: 94870168.5
(22) Date de dépôt: 25.10.1994
(51) Int. Cl.: C08F 10/02, C08F 2/00

(54) **Procédé de production de polyéthylène ayant une distribution large de poids moléculaire**
Verfahren zur Herstellung von Polyethylen mit breiter Molekulargewichtsverteilung
Process for producing polyethylene having a broad molecular weight distribution

(30) Priorité: 26.10.1993 BE 9301144
(43) Date de publication de la demande: 26.04.1995
(73) Titulaire: ATOFINA Research, 7181 Seneffe (Feluy) (BE)
(72) Inventeur: Debras, Guy, B-6210 Les Bons-Villers (BE); Vandaele, Hugo, c/o Petrochim N.V., B-2030 Antwerpen (BE)

(56) Documents cités:
- EP-A- 0 057 420
- US-A- 4 613 484

## Description

La présente invention concerne un procédé pour produire du polyéthylène ayant une distribution large de poids moléculaire. Plus particulièrement, la présente invention se rapporte à la production de copolymères de polyéthylène à haute densité présentant une distribution large ou bimodale de poids moléculaire.

Pour le polyéthylène de haute densité, dénommé ci-après polyéthylène, la distribution de poids moléculaire (MWD) est une des propriétés fondamentales qui détermine les propriétés du polymère, et donc ses applications.

Bien qu'il puisse être difficile d'évaluer l'influence de chacune des propriétés prise de manière indépendante, il est généralement reconnu que le poids moléculaire détermine principalement les propriétés mécaniques tandis que la dispersion de poids moléculaire détermine principalement les propriétés rhéologiques.

Comme une augmentation de poids moléculaire améliore normalement les propriétés physiques des résines, il existe une forte demande pour le polyéthylène à haut poids moléculaire. Cependant ce sont les hauts poids moléculaires qui rendent les polymères plus difficile à transformer. D'autre part, une augmentation de la MWD a tendance à améliorer l'écoulement à taux de cisaillement élevé pendant la transformation. Ainsi, dans des applications exigeant une transformation rapide à assez haut gonflement à la filière comme dans les techniques de soufflage et d'extrusion, l'élargissement de la MWD permet d'améliorer la transformation de polyéthylène à haut poids moléculaire ( = faible indice d'écoulement à l'état fondu).

On pense que, lorsque le polyéthylène présente à la fois un haut poids moléculaire et une distribution large de poids moléculaire, la transformation est rendue plus facile par la partie de bas poids moléculaire alors que la partie de haut poids moléculaire contribue à une bonne résistance à l'impact du film. Un polyéthylène de ce type peut être transformé en dépensant moins d'énergie et avec des rendements plus élevés.

La MWD peut être complètement décrite au moyen de la courbe obtenue par chromatographie en perméation de gel. Toutefois, la MWD est généralement décrite par une valeur qui est une bonne évaluation, également appelée l'indice de polydispersité, et qui représente le rapport entre le poids moléculaire moyen en poids et le poids moléculaire moyen en nombre.

En fonction des applications, la MWD requise varie de 10 à 30.

Afin d'obtenir les avantages d'une distribution large, on a d'abord proposé de préparer du polyéthylène ayant une MWD large en mélangeant des polyéthylènes ayant différents poids moléculaires. Cependant, les résultats n'étaient pas satisfaisants car un simple mélange ne se comporte pas comme un mélange intime de polyéthylènes préparés in situ.

On a également proposé d'utiliser des réactions en deux étapes dans un réacteur. Des exemples de ces procédés sont décrits dans GB-1174542-A, GB-2020672-A et BE-883687-A.

On a ensuite proposé d'utiliser plusieurs réacteurs connectés en série.

Dans ce but on connaît un procédé pour la préparation d'un polymère d'éthylène polymodal dans lequel l'éthylène est polymérisé en deux étapes en présence d'un composé organoaluminium contenant un halogène, un composé de métal de transition et différentes quantités d'hydrogène dans chaque étape (GB 1233599).

De plus, on connaît un procédé pour la préparation de polymères d'oléfine par polymérisation en deux étapes, procédé dans lequel le polymère à haut poids moléculaire est préparé lors de la première étape avec un rapport H₂/C₂H₄ bas et le polymère à bas poids moléculaire est préparé dans la deuxième étape avec un rapport H₂/C₂H₄ élevé (EP-A-57,352). Le catalyseur utilisé est, entre autres, un composé organoaluminium contenant un halogène ainsi que le produit de la réaction d'un composé organomagnésien contenant de l'oxygène, d'un composé organotitane contenant de l'oxygène (ces deux composés étant en solution) et d'un halogénure d'aluminium. Un procédé similaire est décrit dans EP-57420-A.

On a également proposé un procédé pour polymériser l'éthylène en deux étapes dans lequel la pression dans le second réacteur est maintenue inférieure à celle du premier réacteur; la polymérisation est effectuée en présence de catalyseur Ziegler-Natta habituel tel qu'un catalyseur de métal de transition supporté sur un support solide et un composé organoaluminium. Des exemples de tels procédés sont décrits dans les brevets US 4,414,369 et US 4,338,424.

Toutefois les polymères d'éthylène obtenus au moyen de ces procédés ne conviennent pas vraiment du point de vue de leurs propriétés mécaniques. On a maintenant trouvé qu'on pouvait améliorer les procédés de l'art antérieur qui utilisent deux réacteurs à boucle en phase liquide (liquid-full loop reactors) connectés en série.

Dès lors un objet de la présente invention est d'apporter une amélioration à de tels procédés pour la copolymérisation de l'éthylène pour former des copolymères d'éthylène ayant une bonne aptitude à la transformation, de bonnes propriétés physiques et des applications diverses.

On a trouvé que ce but pouvait être atteint avec un procédé en deux étapes utilisant des réacteurs à boucle en phase liquide connectés en série, l'amélioration consistant à utiliser une ou plusieurs jambes de décantation du premier réacteur pour le transfert.

On a maintenant trouvé que des polyalcènes à distribution large de poids moléculaire et de très bonne homogénéité pouvaient être obtenus par le procédé de polymérisation d'éthylène avec, au plus, 20 % en moles d'une ou plusieurs autres alpha-alcènes ayant de 3 à 10 atomes de carbone, dans deux réacteurs à boucle en phase liquide connectés en série, à une température de 50 à 120°C, de préférence de 60 à 110°c, sous pression absolue de 1 à 100 bar, en présence d'un catalyseur, avec régulation du poids moléculaire moyen, lequel procédé comprenant le fait que la polymérisation est réalisée de telle manière que l'introduction du co-monomère est essentiellement effectuée dans le premier réacteur, que dans le premier réacteur le poids moléculaire est régulé pour former des polymères ayant un indice de fusion sous haute charge (high load melt index selon la norme ASTM-D1238, 190°C/21, 6kg; HLMI) compris entre 0,01 et 10 g/10' et que le temps de séjour dans le premier réacteur est ajusté pour produire 30 à 70 % en pois du polymère total, tandis que dans le deuxième réacteur le poids moléculaire est régulé pour former des polymères tels que les polymères finaux ont un HLMI plus grand que 1 g/10', l'amélioration consistant à utiliser une ou plusieurs jambes de décantation du premier réacteur pour le transfert.

L'éthylène est injecté avec le comonomère dans le premier réacteur à boucle ainsi que le système catalytique (c-à-d. le catalyseur précontacté avec le cocatalyseur).

La polymérisation en suspension de l'éthylène est effectuée dans deux réacteurs à boucle en phase liquide connectés en série. Les réacteur à boucle sont connus dans l'art et ne doivent pas être décrits ici; une référence est faite par exemple aux brevets US-3,152,872-A, US-3,242,150-A et US-4,613,484-A.

Ainsi qu'indiqué préalablement, le comonomère alpha-oléfine doit être introduit et copolymérisé essentiellement dans le premier réacteur. Comme comonomère pouvant être utilisé dans le présent procédé, les alpha-oléfines ayant de 3 à 10 atomes de carbone sont utilisées, de préférence le 1-hexène.

La polymérisation est effectuée à une température comprise entre 50 et 120°C, de préférence entre 60 et 110°C, et à une pression comprise entre 1 et 100 bar, de préférence entre 30 et 50 bar.

La régulation de poids moléculaire est connue dans l'art et ne nécessite pas d'être décrite plus avant. Quand on emploie des catalyseurs de type Ziegler-Natta, l'hydrogène est préférentiellement utilisé, une plus haute pression en hydrogène conduisant à un poids moléculaire moyen plus bas; ainsi, on maintient dans le premier réacteur une faible concentration en hydrogène, par exemple entre 0 et 0,1 % en volume, et une haute concentration en hydrogène dans le second réacteur, par exemple entre 0,5 et 2,4 % en volume. Quand on emploie des catalyseurs de type chrome, on utilise de préférence la température de polymérisation pour réguler le poids moléculaire. Après le premier réacteur le HLMI doit être de préférence compris entre 0,01 et 5 g/10', de préférence entre 0,1 et 2 g/10'. Dans tous les cas le HLMI des polymères finaux est supérieur à celui des polymères obtenus après le premier réacteur, de préférence supérieur à 5 g/10'.

Le courant de polymère d'éthylène obtenu dans le premier réacteur est transféré dans le deuxième réacteur à boucle par l'intermédiaire d'une ou plusieurs jambes de décantation du premier réacteur, par exemple en utilisant deux jambes de décantation (chacune étant remplie indépendamment avec la suspension venant du réacteur, les solides étant concentrés par décantation par gravité, et déchargés). Les réacteurs à boucle sont généralement utilisés avec une concentration en solides de 25 à 45 % en poids, et le contenu d'une jambe de décantation est préférentiellement transféré lorsqu'elle est remplie de solides à une concentration qui est au moins de 5 % en poids supérieure à la concentration des solides dans le réacteur, de préférence au moins de 10 % supérieure, encore de préférence au moins de 20 % supérieure. La suspension transférée dans le second réacteur contient habituellement de 40 à 65 % en poids de solides; une séparation additionnelle des solides et du liquide n'altérerait pas le procédé de l'invention.

On a trouvé de manière surprenante que l'utilisation des jambes de décantation pour le transfert permet d'obtenir des polymères ayant des propriétés améliorées; ceci est effectivement très surprenant au regard de l'art antérieur qui propose soit un seul réacteur opéré successivement sous différentes conditions, soit deux réacteurs en phase liquide entre lesquels la suspension est transférée.

Avec les conditions de polymérisation, on a trouvé que la partie de haut poids moléculaire du polymère (HMW) est formée dans le premier réacteur. Généralement cette partie représente de 10 à 90 % en poids du polymère bimodal, de préférence de 30 à 70 % en poids.

Selon le procédé de l'invention, on effectue le transfert entre les réacteurs en utilisant une ou plusieurs jambes de décantation du premier réacteur. Les jambes de décantation de réacteurs à boucle sont connues dans l'art et ne nécessitent pas d'être décrites ici; une référence est faite par exemple aux brevets US-3,152,872-A, US-3,242,150-A et US-4,613,484-A.

Selon un mode préféré de l'invention, on utilise un catalyseur C qui consiste en un composé de métal de transition (composé A) qui est le produit de la réaction d'un composé organomagnésien avec un composé du titane, un composé organoaluminium (composé B), et en option un ou plusieurs donneurs d'électron.

Comme composé de métal de transition convenant à la préparation du composé A, on peut utiliser les composés de titane tétravalent halogénés, de préférence les composés de titane de formule générale TiXₙ(OR)₄₋ₙ dans laquelle n vaut 1 à 4, X représente le chlore ou le brome et R des radicaux hydrocarbures identiques ou différents, en particulier des groupes alkyles à chaîne droite ou branchés ayant de 1 à 18 atomes de carbone, de préférence de 1 à 10 atomes de carbone. Les exemples de ce type sont :
TiCl₄, Ti(OC₂H₅)₂Cl₂, Ti(OC₂H₅)₃Cl, Ti(OC₃H₇)₂Cl₂, Ti(OC₃H₇)₃Cl, Ti(OiC₃H₇)₂Cl₂, Ti(OiC₃H₇)₃Cl, Ti(OiC₄H₉)₂Cl₂, Ti(OiC₄H₉)₃Cl.

Dans certains cas, il peut être avantageux de préparer in situ des esters d'acide halogéno-ortho-titanique de la formule ci-dessus en faisant réagir l'ester d'acide ortho-titanique correspondant avec le TiCl₄ en proportion correspondante.

Cette réaction est effectuée de manière avantageuse à des températures comprises entre 0 et 200°C, la température supérieure limite étant déterminée par la température de décomposition du composé de titane tétravalent halogéné utilisé; la réaction est effectuée de manière avantageuse à des températures comprises entre 60 et 120°C.

On peut effectuer la réaction dans des solvants inertes, par exemple des hydrocarbures aliphatiques ou cycloaliphatiques tels que ceux utilisés couramment pour le procédé basse pression comme les propane, butane, pentane, hexane, heptane, cyclohexane, méthyl-cyclohexane ainsi que les hydrocarbures aromatiques tels que le benzène ou le toluène; on peut également utiliser des fractions d'huile Diesel hydrogénées dont on a retiré avec soin l'oxygène, les composés soufrés et l'humidité.

Ensuite, le produit de la réaction de l'alcoolate de magnésium et du composé de titane tétravalent halogéné qui est insoluble dans les hydrocarbures est purifié du composé de titane qui n'a pas réagi en le lavant plusieurs fois avec l'un des diluants inertes ci-dessus dans lequel le composé de titane-(IV) utilisé est facilement soluble.

Pour la préparation du composé A, on peut utiliser des alcoolates de magnésium, de préférence ceux de formule générale Mg(OR')₂ où R' représente des radicaux hydrocarbures identiques ou différents, de préférence des groupes alkyles à chaîne droite ou branchés ayant de 1 à 10 atomes de carbone; les alcoolates ayant des groupes alkyles de 1 à 4 atomes de carbone sont préférés. Les exemples de ce type sont :
Mg(OCH₃)₂, Mg(OC₂H₅)₂, Mg(OC₃H₇)₂, Mg(OiC₃H₇)₂, Mg(OC₄H₉)₂, Mg(OiC₄H₉)₂, Mg (OCH₂-CH₂C₆H₅)₂.

On peut préparer les alcoolates de magnésium avec des méthodes connues, par exemple en faisant réagir du magnésium et des alcools, en particulier des alcools aliphatiques monohydriques.

On peut également utiliser des alcoolates de magnésium de formule générale X-Mg-OR' où X représente un halogène, (SO₄)_{1/2}, un carboxylate, en particulier un acétate, ou OH, et R' a la même définition que ci-dessus.

Par exemple, on peut obtenir ces composés en faisant réagir des solutions alcooliques d'acides anhydres correspondants avec du magnésium.

La teneur en titane du composé A peut être comprise entre 1,5 et 20 % en poids. Cette teneur peut être contrôlée par le temps de réaction, la température de réaction et la concentration en composé de titane halogéné tétravalent utilisé.

La concentration en composé de titane fixé sur le composé de magnésium est avantageusement comprise entre 0,005 et 1,5 mmole par litre d'agent dispersant ou par volume de réacteur, de préférence entre 0,03 et 0,8 mmole par litre. En général, même des concentrations plus élevées sont possibles.

Les composés organo-aluminium utilisés peuvent être les produits de la réaction entre des trialkyl aluminium ou des hydrides de dialkyl aluminium dont les radicaux alkyles contiennent de 1 à 16 atomes de carbone, de préférence Al(iBu)₃ (Bu = butyl) ou Al(iBu)₂H, et des dioléfines contenant de 4 à 20 atomes de carbone, de préférence l'isoprène, par exemple l'aluminium isoprényl.

Par ailleurs, comme composés B appropriés il y a des composés organo-aluminium chlorés, par exemple des monochlorures de dialkyl-aluminium de formule R"₂ AlCl ou des sesquichlorures d'alkyl-aluminum de formule R"₃Al₂Cl₃, formules dans lesquelles R" représente des radicaux hydrocarbures identiques ou différents, de préférence des groupes alkyles ayant de 1 à 16 atomes de carbone, de préférence de 2 à 12 atomes de carbone, par exemple (C₂H₅)₂AlCl, (iC₄H₉)₂AlCl, (C₂H₅)₃Al₂Cl₃.

On peut utiliser avantageusement comme composé B des trialkyl aluminium de formule AlR'''₃ ou des hydrures de dialkyl aluminium de formule AlR'''₂H, formules dans lesquelles R''' représente des hydrocarbures identiques ou différents, de préférence des groupes alkyles ayant de 1 à 16 atomes de carbone, de préférence de 2 à 6 atomes de carbone, par exemple Al(C₂H₅)₃, Al(C₂H₅)₂H, Al(C₃H₇)₃, Al(C₃H₇)₂H, Al(iC₄H₉)₃, ou Al(iC₄H₉)₂H.

Le composé B peut être utilisé dans des concentrations allant de 0,1 à 10 mmole par litre de volume de réacteur, de préférence de 0,5 à 5 mmole.

En option le catalyseur C peut comprendre en plus un ou plusieurs donneurs d'électrons usuels, ces donneurs d'électrons pouvant être de type interne et/ou externe. Les donneurs d'électron sont connus dans le métier; les donneurs d'électron habituels sont des composés ester, tels que l'isoalkylphthalate, des composés diéther et des composés silane.

Selon d'autres modes de l'invention, on peut utiliser d'autres systèmes catalytiques, tels que des catalyseurs métallocènes (habituellement avec un aluminoxane comme cocatalyseur) ou des catalyseurs de type chrome. Ces types de catalyseurs sont connus dans l'art et ne doivent pas être décrits ici.

Les exemples ci-après sont donnés à titre d'illustration du procédé de l'invention et ne constituent en aucun cas une limitation.

### Exemple 1

On a effectué une copolymérisation d'éthylène avec du 1-hexène dans deux réacteurs à boucle en phase liquide connectés en série selon le procédé de polymérisation décrit ci-dessus et avec les conditions spécifiées dans le tableau 1.

Le transfert entre les réacteurs a été effectué au travers d'une jambe de décantation du premier réacteur, la jambe étant chaque fois remplie avec la suspension dans laquelle le polymère représente environ 60% en poids. Le catalyseur a été préparé en suivant l'exemple 1 du brevet US 4,816,433. Comme cocatalyseur on a utilisé l'aluminium tri-isobutyl. Comme diluant on a utilisé l'isobutane (iC₄ ; 35 kg/h).

Les propriétés physiques et mécaniques du produit final sont également résumées dans le tableau 1.

### Exemple A comparatif

On a effectué une copolymérisation d'éthylène avec du 1-hexène dans deux réacteurs à boucle en phase liquide en utilisant le même système catalytique et avec les mêmes conditions de réaction que dans l'exemple 1 à l'exception de ce qui est indiqué dans le tableau 1 et à l'exception du fait qu'on a transféré la suspension en continu du premier au deuxième réacteur en utilisant une ligne de transfert. Les propriétés de la résine obtenue sont également résumées dans le même tableau.

En utilisant le procédé de l'invention on observe que le 1-hexène est préférentiellement polymérisé dans la fraction de haut poids moléculaire; il est connu que cela confère de meilleures propriétés au polymère (Narumi Ishikawa et al., Proc. 10th Plastic Fuel Gas Pipe Symposium, Oct. 27-29, 1987, pages 175-183).

**TABLEAU I**

| | **Comparatif** | **Exemple** |
|---|---|---|
| | Sans jambes de décantation | Avec jambes de décantation |
| REACTEUR 1 | | |
| Vol réacteur (1) | 70 | 70 |
| T (°C) | 75 | 75 |
| C₂⁻ (kg/h) | 4.0 | 4.95 |
| C₂⁻ (% pds) | 0.51 | 0.74 |
| C₆⁻ (kg/h) | 0.67 | 0.55 |
| C₆⁻ (% pds) | 1.41 | 0.98 |
| H₂ (% vol) | 0.017 | 0.015 |
| PE temps de séjour (min) | 68 | 81 |
| TiBAL (ppm) | 350 | 200 |
| HLMI (g/10') | 0.67 | 0.82 |
| Densité (g/cc) | 0.926 | 0.9204 |
| partie HMW (% pds) | 58 | 54 |

| REACTEUR 2 | | |
|---|---|---|
| Vol réacteur (1) | 35 | 70 |
| T (°C) | 95 | 95 |
| C₂⁻ (kg/h) | 4.0 | 5.1 |
| C₂⁻ (% pds) | 4.0 | 2.2 |
| C₆⁻ (kg/h) | 0 | 0 |
| C₆⁻ (% pds) | 0.7 | 0.51 |
| H₂ (% vol) | 1.84 | 0.86 |
| PE temps de séjour (min) | 29 | 55 |
| HLMI (g/10') | 11.4 | 12.9 |
| Densité (g/cc) | 0.941 | 0.9414 |
| Productivité (g/g cat) | 11150 | 22450 |
| C₆⁻ conversion (% pds) | | |
| Total | 61.5 | 88.2 |
| Réacteur 1 | 57.4 | 93.7 |

## Revendications

1. Procédé de polymérisation d'éthylène avec au plus 20 % en moles d'une ou plusieurs alpha-alcènes ayant de 3 à 10 atomes de carbone, dans deux réacteurs à boucle en phase liquide connectés en série à une température de 50 à 120°C, sous pression absolue de 1 à 100 bar, en présence d'un catalyseur, avec régulation du poids moléculaire moyen, lequel procédé comprenant le fait que la polymérisation est réalisée de telle manière que l'introduction du co-monomère est essentiellement effectuée dans le premier réacteur, que dans le premier réacteur le poids moléculaire est régulé pour former des polymères ayant un HLMI compris entre 0,01 et 10 g/10' et que le temps de séjour dans le premier réacteur est ajusté pour produire 30 à 70 % en poids du polymère total, tandis que dans le deuxième réacteur le poids moléculaire est régulé pour former des polymères tels que les polymères finaux ont un HLMI plus grand que 1 g/10', l'amélioration consistant à utiliser une ou plusieurs jambes de décantation du premier réacteur pour le transfert.

2. Procédé selon la revendication 1 dans lequel le contenu de la jambe de décantation est transféré lorsqu'elle est remplie de solides à une concentration qui est au moins de 5 % en poids supérieure à la concentration des solides dans le premier réacteur.

3. Procédé selon la revendication 2 dans lequel le contenu de la jambe de décantation est transféré lorsqu'elle est remplie de solides à une concentration qui est au moins de 10 % en poids supérieure à la concentration des solides dans le premier réacteur.

4. Procédé selon la revendication 3 dans lequel le contenu de la jambe de décantation est transféré lorsqu'elle est remplie de solides à une concentration qui est au moins de 20 % en poids supérieure à la concentration des solides dans le premier réacteur.

5. Procédé selon l'une quelconque des revendications 1 à 4 dans lequel le catalyseur consiste en un composé de métal de transition qui est le produit de la réaction d'un composé organomagnésien avec un composé du titane, un composé organoaluminium et en option un ou plusieurs donneurs d'électron, le poids moléculaire moyen étant régulé avec de l'hydrogène.

6. Procédé selon l'une quelconque des revendications 1 à 5 dans lequel la température de polymérisation est de 60 à 110°C.

7. Procédé selon l'une quelconque des revendications 1 à 6 dans lequel la pression de polymérisation est de 30 à 50 bar.

8. Procédé selon l'une quelconque des revendications 1 à 7 dans lequel les polymères formés dans le premier réacteur ont un HLMI compris entre 0,01 et 5 g/10', de préférence entre 0,1 et 2 g/10'.

9. Procédé selon l'une quelconque des revendications 1 à 8 dans lequel les polymères finaux ont un HLMI supérieur à 5 g/10'.

## Patentansprüche

1. Verfahren zur Polymerisation von Ethylen mit höchstens 20 Mol-% von einem oder von mehreren alpha-Alkenen mit 3 bis 10 Kohlenstoffatomen, in zwei in Serie geschalteten Reaktoren mit Kreislauf in flüssiger Phase, bei einer Temperatur von 50 bis 120°C, unter einem absoluten Druck von 1 bis 100 bar, in Anwesenheit eines Katalysators, mit einer Regelung des Durchschnittsmolekulargewichts, wobei das Verfahren die Tatsache aufweist, dass die Polymerisation auf solche Art und Weise durchgeführt wird, dass die Einführung des Comonomers im wesentlichen in dem ersten Reaktor vorgenommen wird, dass in dem ersten Reaktor das Molekulargewicht geregelt wird, um Polymere zu bilden die einen zwischen 0,01 und 10 g/10' liegenden HLMI (Schmelzindex unter hoher Last - high load melt index) aufweisen und dass die Verweilzeit in dem ersten Reaktor geregelt wird, um 30 bis 70 Gew.-% des gesamten Polymers zu erzeugen, während in dem zweiten Reaktor das Molekulargewicht geregelt wird um Polymere derart zu erzeugen, dass die endgültigen Polymere einen HLMI von mehr als 1 g/10' aufweisen, wobei die Verbesserung darin besteht, eine oder mehrere Dekantiersäulen des ersten Reaktors zur Überführung zu benutzen.

2. Verfahren gemäß Patentanspruch 1, bei welchem der Inhalt der Dekantiersäule überführt wird, wenn sie gefüllt ist mit Feststoffen von einer Konzentration die wenigstens 5 Gew.-% über der Konzentration der Feststoffe in dem ersten Reaktor liegt

3. Verfahren gemäß Patentanspruch 2, bei welchem der Inhalt der Dekantiersäule überführt wird, wenn sie gefüllt ist mit Feststoffen von einer Konzentration die wenigstens 10 Gew.-% über der Konzentration des Feststoffes in dem ersten Reaktor liegt.

4. Verfahren gemäß Patentanspruch 3, bei welchem der Inhalt der Dekantiersäule überführt wird, wenn sie gefüllt ist mit Feststoffen von einer Konzentration die wenigstens 20 Gew.-% über der Konzentration des Feststoffes in dem ersten Reaktor liegt.

5. Verfahren nach irgendeinem der Patentansprüche 1 bis 4, bei welchem der Katalysator aus einer Verbindung eines Übergangsmetalls besteht, welche das Produkt ist aus der Reaktion einer Organomagnesiumverbindung mit einer Titanverbindung, einer Organoaluminiumverbindung und wahlweise einem oder mehreren Elektronendonatoren, wobei das Durchschnittsmolekulargewicht durch den Wasserstoff geregelt wird.

6. Verfahren nach irgendeinem der Patentansprüche 1 bis 5, bei welchem die Polymerisationstemperatur zwischen 60 und 110°C liegt.

7. Verfahren nach irgendeinem der Patentansprüche 1 bis 6, bei welchem der Polymerisationsdruck bei 30 bis 50 bar liegt.

8. Verfahren nach irgendeinem der Patentansprüche 1 bis 7, bei welchem die in dem ersten Reaktor gebildeten Polymere einen HLMI aufweisen, der zwischen 0,01 und 5 g/10', vorzugsweise zwischen 0,1 und 2 g/10' liegt

9. Verfahren nach irgendeinem der Patentansprüche 1 bis 8, bei welchem die endgültigen Polymere einen HLMI von mehr als 5 g/10' aufweisen.

## Claims

1. Process for producing polyethylene with at most 20% in mols of one or more alpha-alkenes having 3 to 10 atoms of carbon, in two liquid full loop reactors, connected in series at a temperature of 50 to 120°C, at an absolute pressure of 1 to 100 bars, in the presence of a catalyst, with control of the average molecular weight, this process taking in the fact that the polymerising is done in such a way that the co-monomer is essentially introduced into the first reactor, that in the first reactor the molecular weight is controlled to form polymers with a high load melt index [HLMI] between 0.01 and 10 g/10' inclusive, and that the time of being left in the first reactor is adjusted to produce 30 to 70% by weight of the total polymer, while in the second reactor the molecular weight is controlled to form polymers such that the final polymers have an HLMI greater than 1 g/10', the improvement consisting in using one or more settling legs of the first reactor for the transfer.

2. Process according to Claim 1 in which the contents of the settling leg are transferred when it is filled with solids at a concentration which is at least 5% by weight above the concentration of the solids in the first reactor.

3. Process according to Claim 2 in which the contents of the settling leg are transferred when it is filled with solids at a concentration which is at least 10% by weight above the concentration of the solids in the first reactor.

4. Process according to Claim 3 in which the contents of the settling leg are transferred when it is filled with solids at a concentration which is at least 20% by weight above the concentration of the solids in the first reactor.

5. Process according to any one of the Claims 1 to 4 in which the catalyst consists of a transition structure metal compound which is the product of the reaction of an organo-magnesian compound and, optionally, one or more electron donors, the mean molecular weight being controlled with hydrogen.

6. Process according to any one of the Claims 1 to 5 in which the polymerising temperature is from 50 to 110°C.

7. Process according to any one of the Claims 1 to 6 in which the polymerising pressure is 30 to 50 bars.

8. Process according to any one of the Claims 1 to 7 in which the polymers formed in the first reactor have an HLMI between 0.01 and 5 g/10', preferably between 0.1 and 2 g/10'.

9. Process according to any one of the Claims 1 to 8 in which the final polymers have an HLMI higher than 5 g/10'.
